Europäisches Patentamt

European Patent Office

Office européen des brevets

(19)

(11) Veröffentlichungsnummer: **0 187 617**
**B1**

(12) **EUROPÄISCHE PATENTSCHRIFT**

(45) Veröffentlichungstag der Patentschrift:
07.09.88

(21) Anmeldenummer: 85810558.8

(22) Anmeldetag: 25.11.85

(51) Int. Cl.⁴: **F 16 B 13/02, E 04 F 13/08**

(54) **Kunststoff-Spreizdübel.**

(30) Priorität: 13.12.84 DE 3445520

(43) Veröffentlichungstag der Anmeldung:
16.07.86 Patentblatt 86/29

(45) Bekanntmachung des Hinweises auf die Patenterteilung: 07.09.88 Patentblatt 88/36

(84) Benannte Vertragsstaaten:
AT CH DE FR GB LI SE

(56) Entgegenhaltungen:
EP-A- 0 150 668
CH-A- 338 589
CH-A- 344 832
DE-A- 2 607 338
DE-A- 3 005 544
DE-A- 3 023 411
DE-A- 3 312 141
GB-A- 2 028 950
GB-A- 2 049 859
GB-A- 2 091 368

(73) Patentinhaber: HILTI Aktiengesellschaft
FL-9494 Schaan (LI)

(72) Erfinder: Mirsberger, Helmut
Friedrich-List-Strasse 118
D-8000 München 70 (DE)
Erfinder: Popp, Franz
Kennedy-Strasse 2
D-8039 Puchheim (DE)

(74) Vertreter: Wildi, Roland
Hilti Aktiengesellschaft Patentabteilung
FL-9494 Schaan (LI)

## Beschreibung

Die Erfindung betrifft einen Kunststoff-Spreizdübel zur Abstandsbefestigung von Fassadenplatten und dergleichen an Bauwerken, mit einer Zentralbohrung, einem in eine Aufnahmeöffnung im Bauwerk einführbaren, von einer Spreizschraube aufweitbaren Spreizbereich, einem entgegen der Einführrichtung an den Spreizbereich anschliessenden Halsteil, das zur Festlegung der Fassadenplatten spreizbereichsseitig ein Auflager und am freien Ende ein Widerlager aufweist, wobei der zwischen Auflager und Widerlager liegende Abschnitt des Halsteils verkürzbar ausgebildet ist und die Zentralbohrung im restlichen Halsteil Angriffsmittel für den Gewindeangriff der Spreizschraube aufweist.

Mit einem bekannten Kunststoff-Spreizdübel entsprechend der EP-A-0 150 668 (Stand der Technik nach Artikel 54 (3) EPÜ) werden Fassadenplatten und dergleichen im Abstand von Bauwerken befestigt, indem vorerst ein Halsteil des Spreizdübels unter Eingriff in eine Durchtrittsöffnung in den Fassadenplatten festgelegt wird und anschliessend der Spreizdübel mit seinem Spreizbereich zur Verankerung in eine Aufnahmeöffnung im Bauwerk eingeführt wird. Die Verankerung wird durch Aufspreizen des Spreizbereichs mit Hilfe einer Spreizschraube erzielt.

Um mit ein und demselben Spreizdübel unterschiedlich dicke Fassadenplatten befestigen zu können, weist das Halsteil einen dem Eingriff in die Durchtrittsöffnung dienenden, durch Stauchen axial verkürzbaren Abschnitt auf. Die zum Stauchen des Abschnittes erforderliche Kraft wird über die Spreizschraube aufgebracht, wozu diese unter Angriff an einem als Gewindegang ausgebildeten Angriffsmittel im restlichen Halsteil in die Zentralbohrung eingeschraubt wird.

Ferner dient der Gewindegang der Abstützung der Spreizschraube beim Einführen des Spreizbereichs in die Aufnahmeöffnung, um den Eintritt der Spreizschraube in den Spreizbereich und damit dessen vorzeitiges Aufspreizen zu unterbinden. Auch ein Zurückziehen des Spreizdübels zwecks dessen Lagejustierung in der Aufnahmeöffnung ist dank des Gewindeeingriffs der Spreizschraube im Gewindgang durch Ziehen an der Spreizschraube möglich.

Die Herstellung eines solchen Gewindeganges ist spritztechnisch problematisch und ermöglicht nicht die Ausbildung einer üblich grossen Gewindetiefe. Zufolge der reduzierten Gewindetiefe wird nur ein beeinträchtigter Angriff der Spreizschraube erzielt, so dass der Gewindeeingriff insbesondere dann, wenn zur Befestigung dünner Fassadenplatten das Halsteil besonders stark gestaucht werden muss oder beim Einführen des Spreizbereichs in die Aufnahmeöffnung erhöhter Widerstand auftritt, der hierfür aufzubringenden Kraft nicht standhält.

Ferner ist aus der DE-A-3 005 544 ein Spreizdübel mit Spreizbereich und Halsteil bekannt. Dieser Spreizdübel ist zur Abstandsbefestigung von Fassadenplatten und dergleichen unterschiedlicher Dicke nicht geeignet, da er weder über ein Auflager für die Fassadenplatten noch über einen axial verkürzbaren Abschnitt des Halsteiles verfügt. Die Wandung der Zentralbohrung des Spreizdübels weist im Spreizbereich und im Halsteil Rippen auf, die dazu dienen, in Zusammenwirkung mit einer Spreizschraube ein Spreizen des Spreizbereiches und des Halsteiles hervorzurufen. Ein Angriff der Spreizschraube an den Rippen ist ohne gleichzeitiges Einleiten des Spreizvorganges nicht möglich.

Der Erfindung liegt die Aufgabe zugrunde, einen Spreizdübel zur Abstandsbefestigung von Fassadenplatten und dergleichen unterschiedlicher Dicke zu schaffen, der über einen zuverlässigen, vom Spreizvorgang unabhängigen Gewindeeingriff gewährleistende Angriffsmittel für die Spreizschraube verfügt, die sich zudem durch einfache Herstellbarkeit auszeichnen.

Erfindungsgemäss wird die Aufgabe dadurch gelöst, dass die Angriffsmittel als achsparallel in den lichten Querschnitt der Zentralbohrung ragende Rippen ausgebildet sind, und in Umfangsrichtung mittig zwischen den Rippen sich achsparallel erstreckende Führungsleisten mit gegenüber den Rippen geringerer radialer Höhe vorgesehen sind. Achsparallel verlaufende Rippen können spritztechnisch in beliebiger Höhe hergestellt werden. Der Gewindeeingriff der Spreizschraube kommt zustande, indem sich deren Gewinde selbst beim Eindrehen in die Rippen einschneidet. Die Länge der Rippen ist so gewählt, dass mehrere Gewindegänge der Spreizschraube in Eingriff gelangen. Dadurch ist das Aufbringen ausreichender Kräfte für den Stauchvorgang des Abschnittes und für das spreizungsfreie Einführen bzw Justieren des Spreizbereichs gewährleistet. Die Rippen ermöglichen den Eingriff verschiedener Gewindeformen und tragen zudem zu einer Versteifung des Halsteiles bei, was insbesondere bei langen Halsteilen von Vorteil ist.

Aus Gründen der Materialersparnis ist die Wandung des Halsteils zweckmässig sehr dünn gehalten. Die Höhe der Rippen ist in diesem Falle grösser als die Gewindetiefe. Da die Zentralbohrung selbst bei dieser Ausführungsform die Spreizschraube aufgrund des grossen Durchmesserunterschiedes nicht zu zentrieren vermag, sind die in Umfangsrichtung mittig zwischen den Rippen sich achsparallel erstreckenden Führungsleisten mit gegenüber den Rippen geringerer radialer Höhe vorgesehen. Der durch die Führungsleisten geschaffene lichte Querschnitt für den Durchtritt der Spreizschraube entspricht vorzugsweise dem Gewindedurchmesser der Spreizschraube. Die Führungsleisten unterbinden durch Abstützen am Gewinde auch eine im wesentlichen unrunde Aufweitung des Halsteils.

Um einerseits einen gleichmässigen Gewindeeingriff und andererseits die zentrische Lage der Spreizschraube im Halsteil zu gewährleisten, sind die Rippen über den Umfang der Wandung der Zentralbohrung in gleichmässigem Winkelabstand zueinander verteilt. Vorzugsweise sind am Umfang der Zentralbohrung zwei einander diametral gegenüberliegende Rippen angeordnet. Diese Ausbildung zeichnet sich im besonderen durch kleinen Eindrehwiderstand der Spreizschraube aus.

Um beim Eindrehen der Spreizschraube sicherzustellen, dass das Material der Rippen in die volle Tiefe der Gewindegänge eintritt, entspricht der durch die Rippen geschaffene lichte Querschnitt für den Durchtritt der Spreizschraube dem Kerndurchmesser des Gewindes. Die Höhe der im Querschnitt beispielsweise dreieckigen Rippen ist zumindest gleich der Gewindetiefe der Spreizschraube.

Die Erfindung wird nachstehend anhand einer Zeichnung, die ein Ausführungsbeispiel des erfindungsgemässen Spreizdübels wiedergibt, näher erläutert. Es zeigen :

Fig. 1 einen zur Abstandsbefestigung eingeführten, nicht verankerten Spreizdübel im Längsschnitt ;

Fig. 1a den Spreizdübel nach Fig. 1, mit festgelegter Fassadenplatte, im Längsschnitt ;

Fig. 1b den Spreizdübel nach den Fig. 1 und 1a in verankertem Zustand, im Längsschnitt ;

Fig. 2 einen Schnitt durch den Spreizdübel nach Fig. 1, gemäss Schnittverlauf II-II, in vergrösserter Darstellung.

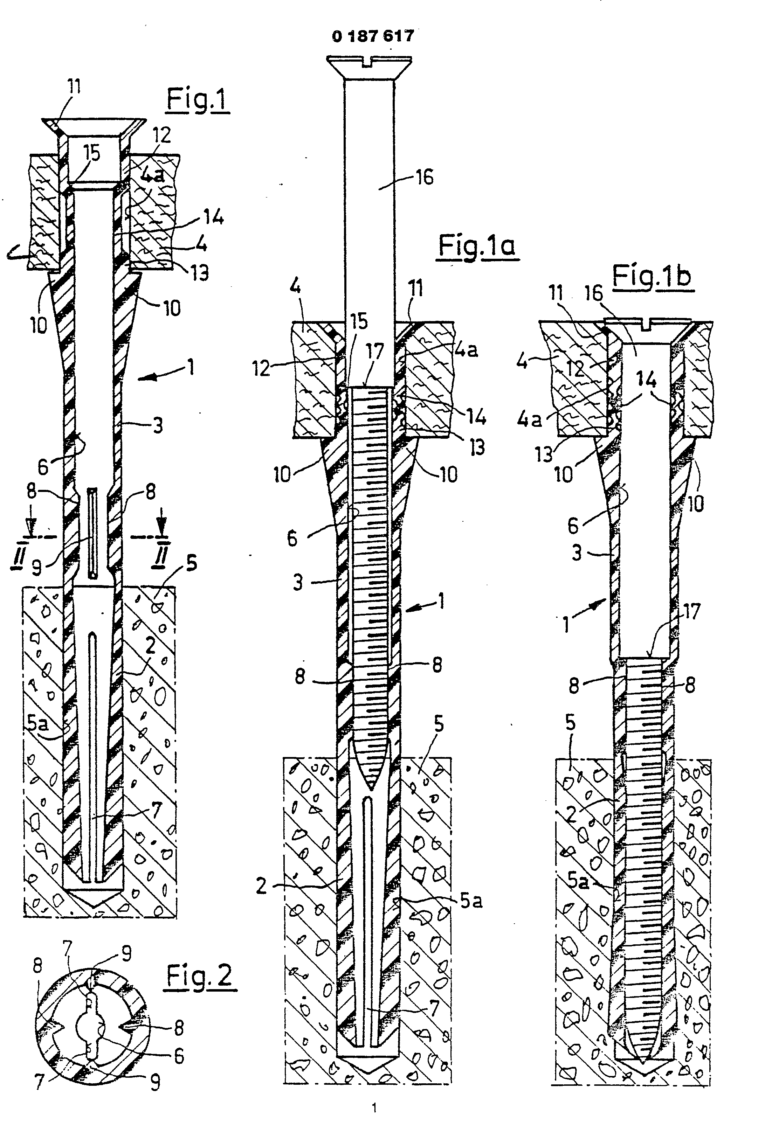

Der in Fig. 1 dargestellte, insgesamt mit 1 bezeichnete Spreizdübel besteht im wesentlichen aus einem setzrichtungsseitigen Spreizbereich 2 und aus einem an diesen anschliessenden Halsteil 3. Der Dübel dient dem Festlegen einer Fassadenplatte 4 im Abstand zu einem Bauwerk 5. Zu diesem Zwecke wird der Dübel 1 durch eine Durchtrittsöffnung 1a hindurch mit dem Spreizbereich 2 in eine Aufnahmeöffnung 5a des Bauwerks 5 eingeführt.

Der Dübel 1 ist von einer Zentralbohrung 6 durchsetzt, die sich im Spreizbereich 2 in Einführrichtung verengt. Der Spreizbereich 2 ist über die Länge der sich verengenden Zone der Zentralbohrung 6 vom einführrichtungsseitigen Ende her mit einem Axialschlitz 7 versehen. Die Zentralbohrung 6 weist im Halsteil 3 zwei einander diametral gegenüberliegende, axial gerichtete Rippen 8 auf. In Umfangsrichtung der Zentralbohrung 6 sind mittig zwischen den Rippen 8 Führungsleisten 9 mit gegenüber den Rippen 8 geringerer Höhe angeordnet, wie dies die Fig. 2 verdeutlicht. Das Halsteil 3 ist ferner mit einem radial einrückbaren, stegartigen Auflager 10 für die Platte 4 versehen. Das Auflager 10 weist in der Projektion eine kreisbogenförmige Mantelkontur auf, deren Radius gleich oder kleiner als der Radius der Durchtrittsöffnung 4a in der Platte 4 ist. Am freien Ende des Halsteils 3 ist ein kopfartiges Widerlager 11 vorgesehen. Zwischen dem Auflager 10 und dem Widerlager 11 erstreckt sich ein hülsenförmiger Abschnitt 12. Dieser weist einen an das Auflager 10 anschliessenden Zentrieransatz 13 auf, dem ein axial stauchbarer eingeschnürter Bereich 14 folgt. Auf der Höhe des widerlagerseitigen Auslaufes des Bereichs 14 ist ein Durchmessersprung der Zentralbohrung 6 vorgesehen, der einen schulterförmigen Anschlag 15 bildet.

Zur Festlegung der Platte 4 gegenüber dem Halsteil 3 wird eine Spreizschraube 16 bis zum Auflaufen an den Rippen 8 in die Zentralbohrung 6 eingestossen. Durch anschliessendes Drehen der Spreizschraube 16 schraubt sich deren Gewinde in die Rippen 8, deren Rücken auf dem Kerndurchmesser des Gewindes liegen, ein. Die auf diese Weise tiefer in die Zentralbohrung 6 eintauchende Spreizschraube 16 wird dabei von den Führungsleisten 9, deren Rücken auf dem Gewindedurchmesser liegen, abgestützt und geführt. Eine Schulter 17 der Spreizschraube 16 läuft alsdann am Anschlag 15 auf. In der Folge verschiebt sich die widerlagerseitige Zone des Abschnittes 12 zum Auflager 10 hin, bis das Widerlager 11 sich in einer Ansenkung der Durchtrittsöffnung 4a abstützt. Wie der Fig. 1a zu entnehmen ist, wird der Bereich 14 dabei gestaucht und legt sich unter Ausknickung gegen die Wandung der Durchtrittsöffnung 4a an. Die nun erlangte Einschraubposition der Spreizschraube 16 gewährleistet einen unverschieblichen gegenseitigen Halt von Dübel 1 und Platte 4.

Der Dübel 1 wird alsdann unter Angriff an der Spreizschraube 16 mit dem längsgeschlitzten Spreizbereich 2 in die Aufnahmeöffnung 5a des Bauwerks 5 eingeführt und kann so dank des Gewindeeingriffs in den Rippen 8 zusammen mit der Platte 4 in richtige Abstandsposition gebracht werden (Fig. 1a). Anschliessend wird die Spreizschraube 16 vollends in den Dübel 1 eingeschraubt, wobei der Spreizbereich 2 durch Einlaufen des vorderen Gewindeabschnittes der Spreizschraube 16 in die sich verengende Zone der Zentralbohrung 6 in die Aufnahmeöffnung 5a verspreizt wird, wie dies der Fig. 1b zu entnehmen ist. Die an die Schulter 17 anschliessende verdickte Zone der Spreizschraube 16 hat dabei ein verstärktes Anpressen der ausgeknickten Falten des Bereichs 14 sowie ein Anpressen des Zentrieransatzes 13 zur Wandung der Durchtrittsöffnung 4a hin bewirkt, so dass zusätzlich zur formschlüssigen Halterung der Platte 4 durch das Auflager 10 und das Widerlager 11 auch ein Halt durch eine Verspreizung erreicht wird.

**Patentansprüche**

1. Kunststoff-Spreizdübel (1) zur Abstandsbefestigung von Fassadenplatten (4) und dgl an Bauwerken (5), mit einer Zentralbohrung (6), einem in eine Aufnahmeöffnung (5a) im Bauwerk (5) einführbaren, von einer Spreizschraube (16) aufweitbaren Spreizbereich (2), einem entgegen der Einführrichtung an den Spreizbereich (2) anschliessenden Halsteil (3), das zur Festlegung der Fassadenplatten (4) spreizbereichseitig ein Auflager (10) und am freien Ende ein Widerlager (11) aufweist, wobei der zwischen Auflager (10) und Widerlager (11) liegende Abschnitt (12) des Halsteiles (3) verkürzbar ausgebildet ist und die Zentralbohrung (6) im restlichen Halsteil (3) Angriffsmittel für den Gewindeangriff der Spreizschraube (16) aufweist, dadurch gekennzeichnet, dass die Angriffsmittel als achsparallel in den lichten Querschnitt der Zentralbohrung (6) ragende Rippen (8) ausgebildet sind und in Umfangsrichtung mittig zwischen den Rippen (8) sich achsparallel erstreckende Führungsleisten (9) mit gegenüber den Rippen (8) geringerer radialer Höhe vorgesehen sind.

2. Spreizdübel nach Anspruch 1, dadurch gekennzeichnet, dass am Umfang der Zentralbohrung (6) zwei einander diametral gegenüberliegende Rippen (8) angeordnet sind.

## Claims

1. A plastics expansible dowel (1) for the spaced fastening of facing plates (4) and the like to buildings (5), with a central bore (6), an expansion region (2) which can be introduced into a reception aperture (5a) in the building (5) and which can be expanded by an expansion screw (16), a neck part (3) which, contrary to the insertion direction, adjoins the expansion region (2) and has for the securing of the facing plates (4) at the expansion region side a bearing surface (10) and at the free end an abutment (11), in which respect that portion (12) of the neck part (3) which lies between bearing surface (10) and abutment (11) is shortenable and the central bore (6) in the remaining neck part (3) has application means for gripping the thread of the expansion screw (16), characterised in that the application means are designed as ribs (8) which project in axially parallel manner into the clear cross-section of the central bore (6) and provided in the circumferential direction centrally between the ribs (8) are guide strips (9) which extend in axially parallel manner and which have a lesser radial height as compared with the ribs (8).

2. An expanding dowel according to claim 1, characterised in that two ribs (8) which lie diametrically opposite each other are arranged on the circumference of the central bore (6).

## Revendications

1. Cheville à expansion en matière plastique (1) pour la fixation à distance de parements pour façades (4) et d'éléments analogues sur des constructions (5), avec un alésage central (6), une section expansible (2) pouvant être introduite dans une ouverture de réception (5a) ménagée dans la construction. (5) et élargie par une vis d'écartement (16), une section de col (3) faisant suite à la section expansible (2), dans le sens opposé à la direction d'enfoncement et présentant, pour la fixation des parements pour façades (4), un appui (10) du côté de la section expansible et une butée (11) à l'extrémité libre, la partie (12) de la section de col (3) située entre l'appui (10) et la butée (11) pouvant être raccourcie et l'alésage central (6) présentant, dans la partie restante de la section de col (3), des moyens d'attaque pour le vissage du filetage de la vis d'écartement (16), caractérisée en ce que les moyens d'attaque sont réalisés sous la forme de nervures (8) dépassant parallèlement à l'axe dans la section libre de l'alésage central (6) et qu'il est prévu, dans la direction circonférentielle au milieu entre les nervures (8), des barrettes de guidage (9) qui s'étendent parallèlement à l'axe et présentent une hauteur radiale plus faible par rapport aux nervures (8).

2. Cheville à expansion selon la revendication 1, caractérisée en ce que deux nervures (8) diamétralement opposées sont disposées sur la circonférence de l'alésage central (6).

0 187 617

Fig.1

Fig.1a

Fig.1b

Fig.2

1